# EUROPEAN PATENT SPECIFICATION

(11) **EP 2 878 238 B1**
(45) Date of publication and mention of the grant of the patent: **11.05.2016**
(21) Application number: 13195378.8
(22) Date of filing: 02.12.2013
(51) Int. Cl.: A47J 19/02

(54) **Rotatable drip-stop for juice extractor**
Drehbarer Tropfstopp für Saftpresse
Coupe-gouttes rotatif pour extracteur de jus

(43) Date of publication of application: 03.06.2015
(73) Proprietor: BSH Hausgeräte GmbH, 81739 München (DE)
(72) Inventor: Cater, Matej, 3301 Petrovce (SI); Orbanic, Henri, 1000 Ljubljana (SI)

(56) References cited:
- WO-A1-2010/128274
- DE-A1-102012 206 163
- GB-A- 2 434 307
- US-A1- 2011 083 565
- US-B1- 6 412 404

## Description

### Background of the invention

The present invention relates to the field of centrifugal juicers, more specifically to a juicer with a juice outlet and a drip-stop means rotatably attached around the juice outlet.

### State of the Art

Drip-stop means for juicers are already known from the State of the art. Several different variations of drip-stop solutions are known in centrifugal juicers. Such solutions most notably include simple tilting of the juice outlet as well as closing the flow of the juice by rotating the juice outlet.

WO2010128274 describes a juicer arrangement comprising a motor-driven appliance capable of extracting juice from fruit and a vessel for receiving the juice, the appliance having an outlet duct for the juice, said duct being tubular about an axis running there-along, the vessel having a lid or cover means pre-formed with an aperture dimensioned and configured to receive said tubular outlet duct, and the duct having an end portion with an internal wall extending chordally there-across, wherein at least said end portion is rotatable about the axis of the duct to invert said wall for juice dispensing and to otherwise position said wall as an anti-dripping dam member to resist liquid flow.

This and similar solutions introduce a barrier that prevents the dripping of the small residual flow of the fluid after the juicer operation has been stopped. It is important to note that such mechanisms must allow that in case there is a larger outflow of the fluid, the solution allows for the outflow of such fluid even when the drip-stop mechanism is closed. Such outflows can for example occur when the juicer is accidentally turned on or when the drip-stop mechanism is closed accidentally during operation. Currently known solutions are very limited as to the total volume of the dripping fluid that can be held using the drip-stop mechanism, especially so as this fluid is held within the cross-section of the outlet duct.

### Problem to be solved

The object underlying the present invention is to provide a drip-stop means with an increased volume of the held fluid while retaining the easy-to-use rotational mechanism for closing the flow of supplemental fluid

### Solution according to the invention

In order to achieve the object underlying the invention, the present invention provides a drip-stop means as defined in claim 1. Advantageous embodiments that can be implemented by themselves or in combination are described in dependent claims.

According to the invention a juicer is provided with a juice outlet and a drip-stop means rotatably attached to the juice outlet wherein the drip-stop means comprises a supplemental fluid compartment, and the said compartment is adapted to be rotated essentially outside the cross section of the juice outlet.
"Essentially outside the cross section" in the sense of the invention means that the supplemental fluid compartment can partially or completely overlap with the juice outlet cross section, however it also extends beyond the actual cross section of the outlet, thus effectively creating additional space laterally removed from the longitudinal axis of the juice outlet and the main flow of the juice.

### Embodiments of the invention

Advantageous embodiments and developments that can be used individually or in combination with one another are the subject matter of the dependent claims.

In a preferred embodiment, the juicer is arranged so that upon rotation of the drip-stop means, the juice overflow is held within the said supplemental fluid compartment. Consequently there is a containment of the juice overflow up to the moment where the supplemental fluid compartment is filled completely. If the overflow volume exceeds this marginal volume, the excess overflow is free to pour out through the spout. This serves as a safety function in case the juicer is set to operation with the drip-stop means in the closed position or the drip-stop means is rotated to the closed position during operation. The supplemental fluid compartment retains the overflow as long as the drip-stop means is in the closed position and releases it when the drip-stop means is repositioned to the open position.

"Juice overflow" in the sense of the invention means the flow resulting from the processing of the fruits or other food in the juicer after the juicer has been stopped. The user usually wants to remove the receiving container with the juice as soon as possible, certainly not later than a second or two after the juicer has been stopped. By that time the juice flow may not have stopped completely, and some overflow can still drip out of the spout even after the container has been removed unless a drip-stop means is attached.

In another preferred embodiment, the supplemental fluid compartment is adapted to be positioned by the user in a closed or open position. For the ease of use, it can be beneficial to have clearly defined open and closed positions, preferably at both ends of the rotation of the drip-stop means so that the user can quickly switch between both positions. It may, however, also be useful to set the drip-stop means in other positions between the open and closed positions in some instances, e.g. for reducing maximum flow rates in case the drip-stop means also comprises protruding elements.

It is preferred, that the supplemental fluid compartment is positioned to the side of the flow of juice and that the flow path is diverted by means of rotation of the drip-stop means. The supplemental fluid compartment is only put in operating position, where it can hold the juice overflow, by rotating the drip-stop means to the closed position. In the closed position, the spout rotates to the side of the drip-stop means thus effectively forming a space that only at this time comes into the path of the juice, which in this case is designated as juice overflow. This space, the supplemental fluid compartment, holds the juice overflow in the space formed in the inner space of the drip-stop means that is below the bottom margin of the rotated spout. As the drip-stop means is returned to the open position, the spout is once again lowered to the very bottom of the drip-stop means and all the fluid is able to flow out. Additionally, the supplemental fluid compartment is rotated to the side and is not in any way interfering with the flow of the juice.

It is envisaged that the juicer comprises an opening in the drip-stop means that allows additional influx of the juice to flow out through the spout after the supplemental fluid compartment has been completely filled with juice overflow. An opening is necessary to prevent a situation where additional influx would back up through the juice outlet to the food processing compartment potentially causing damage or debris accumulation. It is also an important safety feature preventing damage if the juicer is accidentally turned on while the drip-stop means is in the closed position.

It is preferable that the drip-stop means comprises a handle that facilitates rotation of the drip-stop means. The handle allows the user to turn the drip-stop means more easily, preferably using just one finger.

In another possible embodiment, the axis of rotation of the drip-stop means is offset from the axis of the juice outlet. The drip-stop means can be positioned onto the juice outlet in such a manner that the rotational axis of the drip-stop means is offset from the longitudinal axis of the juice outlet. This results in an increased volume of the supplemental fluid compartment, or alternatively in a different geometry of the protruding means' interaction with the flow.

Preferably, the drip-stop means is rotatable by between 60 and 120 deg, preferably by 90 deg, between the fully closed and fully open position. Rotation by an angle of 90 deg is deemed optimal for the purpose of creating the geometry resulting in the supplemental fluid compartment retaining juice overflow most effectively. From the user standpoint it can be beneficial to adjust the angle of rotation between the fully closed and fully opened positions to an angle of rotation between 60 and 120 deg. When a protruding element is implemented for the purpose of interfering with the juice flow in intermediate positions, it can be beneficial to use a larger angle of rotation between the fully closed and open positions so as to optimize the desired interference in one or more of the intermediate positions of the drip-stop means. Also, when rotating the supplemental fluid compartment by more than 90 deg, the holding volume of the supplemental fluid compartment gradually increases. Also angles higher than 120 deg - up to 180 deg or even 270 deg - are conceivable but are less convenient for the user

Further, it is conceivable that the juicer comprises a protruding element that partially extends into the flow of the juice in the completely open position or optionally in the partially closed position of the drip-stop means therefore slowing the flow and decreasing the force of the juice exiting the spout. The protruding element can be used to interfere with the juice flow when the drip-stop is in a predefined rotational position. This is envisaged to prevent the juice flow from exiting the spout too rapidly causing spilling, tipping of the bowl or similar undesired effects.

### Brief description of the drawings

Figure 1 a shows the juicer and drip-stop means assembly;
Figure 1b is a representation of a drip-stop means disconnected from the juicer;
Figure 2a shows an enlarged view of the drip-stop means;
Figure 2b shows the internal cross-section of the drip-stop means; and
Figure 3 shows a schematic representation of the drip-stop means in the closed position.

### Detailed description of the invention

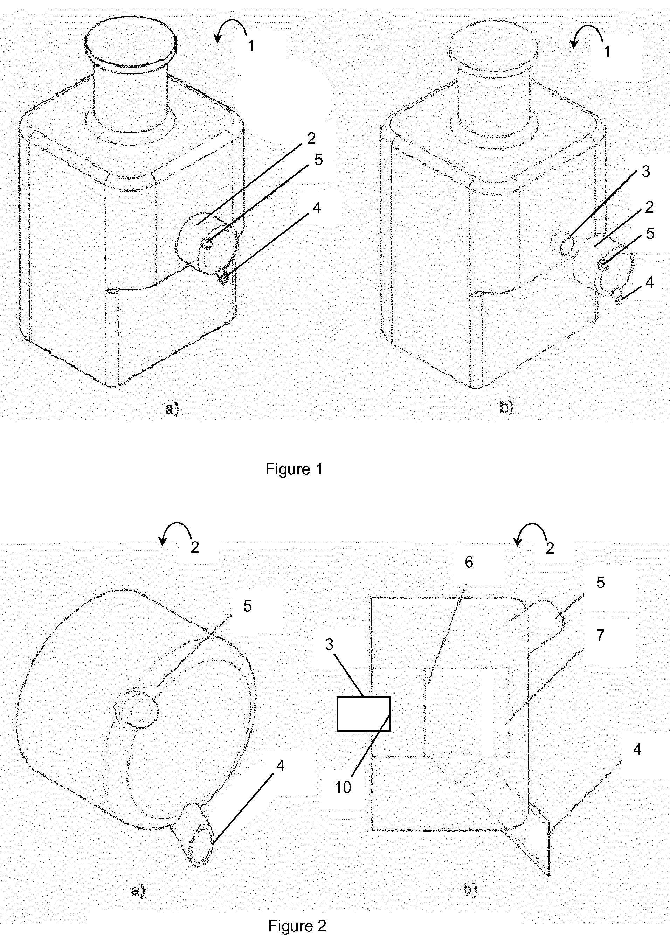

Figure 1a shows the positioning of the drip-stop means 2 on the juicer 1. The drip-stop means 2 is attached onto the juice outlet 3. The drip-stop means 2 is attached in a rotatable manner, its most prominent features on the outside are the spout 4 and the handle 5. The handle 5 may be in various forms and shapes, but is meant help the user to rotate the drip-stop means 2 with as little effort as possible. The presented embodiment is designed in order to allow rotation of the drip-stop means 2 using only one finger. The handle 5 should also preferably allow easy switching between various other positions between the fully open and the fully closed positions. For example, these could include various positions of the protruding element 6 where different positions translate to different interactions of the protruding element 6 with the flow of the juice. One example of such interaction is disturbing a strong flow coming out of the juicer 1 that might potentially cause spilling of the juice if directly fed into the spout 4.

Figure 1b shows the connection between the juicer 1 with the juice outlet 3 and the drip-stop means 2. Preferably it is attached so that the axis of rotation of the drip-stop means 2 is aligned with the axis of the cross section 10 of the juice outlet 3 in the direction of the flow of the juice. Such a setting ensures that the forces are distributed equally while the drip-stop means 2 is adjusted between closed, open and possibly other positions by rotating it. This ensures easier handling by the user. However, the drip-stop means 2 can also be positioned onto the juice outlet 3 in such a way that the longitudinal axis of the juice outlet 3 is not aligned with the rotational axis of the drip-stop means 2. This can be beneficial in order to enlarge the volume of the supplemental fluid compartment 7 as said volume is determined by the height difference between the bottom margin of the juice outlet 4 and the internal bottom margin of the drip-stop means 2 in the closed position. This difference can be increased if the longitudinal axis of the juice outlet 3 is not aligned with the rotational axis of the drip-stop means 2.

Figure 2a shows an enlarged view of the drip-stop means 2 from the outside, while Figure 2b shows a schematic view of the inside of the drip-stop means 2. Spout 4 and handle 5 are shown in both as a reference.

In Figure 2b, the relative positions of the juice outlet 3 providing the flow of juice from the juicer 1, the cross section 10 of the juice outlet 3, the optional protruding element 6, the supplemental fluid compartment 7 and the spout 4 are presented. It should be noted, that the drip-stop means 2 is depicted in the fully open position which can be clearly discerned from the fact that the spout 4 is positioned vertically and facing downwards. This does not exclude other possible variands where the spout 4 is not positioned vertically in the fully open position. Furthermore, an embodiment where the longitudinal axis of the juice outlet 3 is aligned with the rotational axis of the drip-stop means 2 is presented. If the drip-stop means 2 does not comprise a protruding element 6, the flow of the juice from the juice outlet 3 to the spout 4 is completely unobstructed. The same may be true even in the presence of a protruding element 6 if it is designed so as not to interfere with the juice flow at all when the drip-stop means 2 is on the completely open position. The protruding element 6 may alternatively be shaped in a way where it only (fully or partially) interferes with the flow of the juice pouring out of the juice outlet 3 when the drip-stop means 2 is partially rotated or rotated to the fully closed position. It is conceivable that the level of obstruction may be regulated in several stages. The objective of such a system is to allow the user to prevent the stream coming out of the spout 4 to be too strong and possibly cause spilling. The protruding element 6 may optionally be shaped so as to divert the stream quickly when the drip-stop means 2 is rotated to the fully closed position. This in turn is helpful to prevent the dripping more quickly than using the supplemental fluid compartment 7 alone. The supplemental fluid compartment 7 itself is only "active" when the drip-stop means 2 is rotated considerably from the fully open position. In the fully open position of the drip-stop means 2 the spout 4 is facing vertically downwards and there is no fluid held. The supplemental fluid compartment 7 can only hold juice overflow 8 after the spout 4 has risen enough through the rotation of the drip-stop means 2 away from the fully open position so that the bottom margin of the spout 4 rises above the interior bottom of the supplemental fluid compartment 7. To achieve a substantial volume of the held juice overflow 8, the drip-stop means 2 should be rotated by at least 60 degrees. The volume of the held fluid increases with the angle of rotation, however, angles of rotation above 120 degrees are not practical from the user standpoint. The preferred angle of rotation of the drip-stop means 2 is 90 degrees, although there may possibly be other optimal angles of rotations when using various shapes and purposes of protruding elements 6. When the drip-stop means 2 is rotated back to the fully open position, the supplemental fluid compartment 7 is no longer able to hold any fluid and the remaining juice overflow 8 flows out of the spout 4.

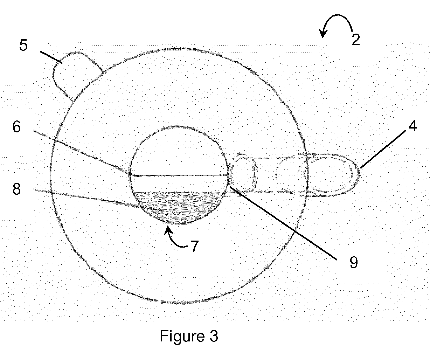

Figure 3 shows the drip-stop means 2 in the fully closed position when the angle of rotation is set at 90 degrees. Positioning of the handle at a 45-degree angle from the vertical axis is deemed ergonomically beneficial as both the fully closed and the fully open positions are at a 45-degree angle from the vertical. When the drip-stop means 2 is in the fully closed position as depicted in Figure 3, the supplemental fluid compartment 7 is at the bottom of the drip-stop means 2 and the juice overflow 8 is held in the supplemental fluid compartment 7. The protruding element 6 may be designed so that the juice overflow 8 is diverted into the supplemental fluid compartment 7 even before the dripping through the spout 4 would otherwise fully stop due to the rotation of the drip-stop means 2. The supplemental fluid compartment 7 may also comprise a barrier that additionally increases the height of juice overflow 8 that can be held in the fully closed position. It is, however, important that the supplemental fluid compartment 7 has an opening 9 in the drip-stop means 2, usually simply an opening at the top of the supplemental fluid compartment 7 as that allows the excessive juice overflow 8 to flow through the spout 4. "Excessive" juice overflow 8 means the flow of juice from the juicer 1 after the supplemental fluid compartment 2 has been completely filled with juice overflow 8. In the absence of such an opening 9, there would be a danger of a backflow of the juice through the juice outlet 3 into the juice extracting parts of the juicer 1 and consequently of damage to the juicer 1.

Features described in the claims and in the description can have relevance to the presented invention either by themselves or in any combination thereof.

### Feature list

1 juicer
2 drip-stop means
3 juice outlet
4 spout
5 handle
6 protruding element
7 supplemental fluid compartment
8 juice overflow
9 opening in the drip-stop means
10 cross section of the juice outlet

## Claims

1. A juicer (1) with a juice outlet (3) and a drip-stop means (2) rotatably attached to the juice outlet (3) **characterized in that** the drip-stop means (2) comprises a supplemental fluid compartment (7), said compartment (7) adapted to be rotated essentially outside the cross section (10) of the juice outlet (3).

2. A juicer (1) according to claim 1, **characterized in that** upon rotation of the drip-stop means (2), the juice overflow (8) is held within the said supplemental fluid compartment (7)

3. A juicer (1) according to any of the previous claims, **characterized in that** the supplemental fluid compartment (7) is adapted to be positioned by the user in a closed or open position.

4. A juicer (1) according to any of the previous claims, **characterized in that** the supplemental fluid compartment (7) is positioned to the side of the flow of juice and that the flow path is diverted by means of rotation of the drip-stop means (2).

5. A juicer (1) according to any of the previous claims, **characterized by** an opening (9) in the drip-stop means (2) that allows additional influx of the juice to flow out through the spout (4) after the supplemental fluid compartment (7) has been completely filled with juice overflow (8).

6. A juicer (1) according to any of the previous claims, **characterized in that** the drip-stop means (2) comprises a handle (5) that facilitates rotation of the drip-stop means (2).

7. A juicer (1) according to any of the previous claims, **characterized in that** the axis of rotation of the drip-stop means (2) is offset from the axis of the juice outlet (3).

8. A juicer (1) according to any of the previous claims, **characterized in that** the drip-stop means (2) is rotatable by between 60 and 120 deg, preferably by 90 deg, between the fully closed and fully open position.

9. A juicer (1) according to any of the previous claims, **characterized in that** a protruding element (6) of the supplemental fluid compartment (7) partially extends into the flow of the juice in the completely open position or optionally in the partially closed position of the drip-stop means (2) therefore slowing the flow and decreasing the force of the juice exiting the spout (4).

## Patentansprüche

1. Saftzentrifuge (1) mit einem Saftauslass (3) und einem Tropfstoppmittel (2), das drehbar an dem Saftablauf (3) angebracht ist, **dadurch gekennzeichnet, dass** das Tropfstoppmittel (2) eine zusätzliche Flüssigkeitskammer (7) umfasst, die so ausgelegt ist, dass sie im Wesentlichen außerhalb des Querschnitts (10) des Saftauslasses (3) gedreht wird.

2. Saftzentrifuge (1) nach Anspruch 1, **dadurch gekennzeichnet, dass** überschüssiger Saft (8) nach dem Drehen des Tropfstoppmittels (2) in der zusätzlichen Flüssigkeitskammer (7) verbleibt.

3. Saftzentrifuge (1) nach einem der vorhergehenden Ansprüche, **dadurch gekennzeichnet, dass** die zusätzliche Flüssigkeitskammer (7) so ausgelegt ist, dass sie vom Benutzer in einer geschlossenen oder einer geöffneten Position positioniert wird.

4. Saftzentrifuge (1) nach einem der vorhergehenden Ansprüche, **dadurch gekennzeichnet, dass** die zusätzliche Flüssigkeitskammer (7) seitlich vom fließenden Saft positioniert ist und der Fließweg mit Hilfe einer Drehung des Tropfstoppmittels (2) in eine andere Richtung gelenkt wird.

5. Saftzentrifuge (1) nach einem der vorhergehenden Ansprüche, **gekennzeichnet durch** eine Öffnung (9) in dem Tropfstoppmittel (2), die es ermöglicht, dass weiterer hereingeflossener Saft aus dem Ausgießer (4) fließt, wenn die zusätzliche Flüssigkeitskammer (7) vollständig mit überschüssigem Saft (8) gefüllt ist.

6. Saftzentrifuge (1) nach einem der vorhergehenden Ansprüche, **dadurch gekennzeichnet, dass** das Tropfstoppmittel (2) einen Griff (5) umfasst, der ein Drehen des Tropfstoppmittels (2) erleichtert.

7. Saftzentrifuge (1) nach einem der vorhergehenden Ansprüche, **dadurch gekennzeichnet, dass** die Rotationsachse des Tropfstoppmittels (2) zur Achse des Saftauslasses (3) versetzt ist.

8. Saftzentrifuge (1) nach einem der vorhergehenden Ansprüche, **dadurch gekennzeichnet, dass** sich das Tropfstoppmittel (2) um zwischen 60 und 120 Grad, vorzugsweise um 90 Grad, zwischen der komplett geschlossenen und der komplett geöffneten Position drehen lässt.

9. Saftzentrifuge (1) nach einem der vorhergehenden Ansprüche, **dadurch gekennzeichnet, dass** ein vorstehendes Element (6) der zusätzlichen Flüssigkeitskammer (7) in der komplett geöffneten Position oder wahlweise in der teilweise geschlossenen Position des Tropfstoppmittels (2) teilweise in den fließenden Saft hinein verläuft und diesen somit verlangsamt und den Druck des aus dem Ausgießer (4) herausfließenden Safts verringert.

## Revendications

1. Un extracteur de jus (1) avec un orifice de sortie de jus (3) et un dispositif coupe-gouttes (2) fixé rotatif à l'orifice de sortie de jus (3) **caractérisé en ce que** le dispositif coupe-gouttes (2) comprend un compartiment de fluide supplémentaire (7), ledit compartiment (7) étant adapté de façon à être pivoté essentiellement à l'extérieur de la section transversale (10) de l'orifice de sortie de jus (3).

2. Un extracteur de jus (1) selon la revendication 1, **caractérisé en ce que**, lors de la rotation du dispositif coupe-gouttes (2), le trop-plein de jus (8) est conservé à l'intérieur dudit compartiment de fluide supplémentaire (7).

3. Un extracteur de jus (1) selon l'une quelconque des revendications précédentes, **caractérisé en ce que** le compartiment de fluide supplémentaire (7) est adapté de façon à être positionné par l'utilisateur dans une position fermée ou ouverte.

4. Un extracteur de jus (1) selon l'une quelconque des revendications précédentes, **caractérisé en ce que** le compartiment de fluide supplémentaire (7) est positionné sur le côté de l'écoulement de jus et **en ce que** le trajet d'écoulement est dévié au moyen d'une rotation du dispositif coupe-gouttes (2).

5. Un extracteur de jus (1) selon l'une quelconque des revendications précédentes, **caractérisé par** une ouverture (9) dans le dispositif coupe-gouttes (2) qui permet à un afflux additionnel du jus de s'écouler au travers du bec verseur (4) une fois le compartiment de fluide supplémentaire (7) totalement rempli avec le trop-plein de jus (8).

6. Un extracteur de jus (1) selon l'une quelconque des revendications précédentes, **caractérisé en ce que** le dispositif coupe-gouttes (2) comprend une poignée (5) qui facilite la rotation du dispositif coupe-gouttes (2).

7. Un extracteur de jus (1) selon l'une quelconque des revendications précédentes, **caractérisé en ce que** l'axe de rotation du dispositif coupe-gouttes (2) est décalé de l'axe de l'orifice de sortie de jus (3).

8. Un extracteur de jus (1) selon l'une quelconque des revendications précédentes, **caractérisé en ce que** le dispositif coupe-gouttes (2) est pivotable de 60 à 120 degrés, de préférence de 90 degrés, entre le position totalement fermée et la position totalement ouverte.

9. Un extracteur de jus (1) selon l'une quelconque des revendications précédentes, **caractérisé en ce qu'**un élément en saillie (6) du compartiment de fluide supplémentaire (7) s'étend partiellement dans l'écoulement du jus dans la position totalement ouverte ou éventuellement dans la position partiellement fermée du dispositif coupe-gouttes (2), ralentissant en conséquence l'écoulement et diminuant la force du jus sortant du bec verseur (4).
